# EUROPEAN PATENT APPLICATION

(11) **EP 1 319 614 A2**
(43) Date of publication of application: **18.06.2003**
(21) Application number: 02027541.8
(22) Date of filing: 09.12.2002
(51) Int. Cl.: B65G 47/90

(54) **Device and method for loading to and unloading from a roller-way**

(30) Priority: 11.12.2001 IT VI20010259
(71) Applicant: 3 Erre Automazioni S.R.L., 36010 Carre' (Vicenza) (IT)
(72) Inventor: Bortoloso, Roberto, 36010 Chiuppano (Vicenza) (IT)
(74) Representative: Bettello, Pietro, Dott. Ing.

(57) **Abstract**

The invention concerns a loading/unloading work group on a roller group, particularly suitable for being inserted in a transportation unit for semi-worked products such as panels of wood, plastic and the like. Such a work group is characterised in that it has articulated arms which allow fast loading/unloading of the products placed on the roller group itself.

## Description

The present finding regards a loading/unloading work group on a roller group.

As is well known, in treatment units and lines there is a transportation step of semi-worked products, such as panels of wood, plastic, polystyrene and the like, which sees to lifting said products, stacked in a pile, to deposit them lined up in a row on a single plane or else, vice-versa, or else which sees to lifting said products arranged in a row on a single plane to arrange them on top of each other so as to form piles.

Operatively, the work groups which carry out such operations substantially consist of conveyors such as platforms, roller groups and conveyor belts of various types, with a gripper above it which, translating, picks up and deposits the products from one conveyor to the next.

The purpose of the present finding is that of foreseeing a work group to be applied to a roller group with motorised rollers, which allows the loading and/or unloading from it of products in a very fast manner.

Such a purpose is achieved by foreseeing that the support surface for the products to be loaded/unloaded on the roller group consists of a plurality of arms, arranged parallel and opposite each other so as to form two opposite and parallel rows thereof, which have the following constructive details:
- they are arranged in a direction substantially parallel to the direction of the axis of the rollers of the roller group;
- they are arranged separated from each other so that, when they are arranged horizontally and are have vertical motion, they can insert into the spaces of the rollers of the roller group.
- They are pivoted at one of their ends, so as to be able to pass from a horizontal position, which defines the support surface for the products, to a vertical position, when they are inactive;
- They are pivoted on pins arranged outside and to the side of the roller group, for which reason when they are inactive and in vertical position they can slide vertically without interfering with the roller group itself.

A first advantage gained with such a type of construction consists of the fact that, with just vertical lowering motion of the arms arranged horizontally, the products supported by it are deposited on the roller group (loading step) whereas, vice-versa, with vertical lifting motion thereof the lifting of the products rested upon the roller group itself (unloading step) is realised;

This removes the need for further gripping or positioning devices, to the great advantage of the cost of the unit.

A second advantage gained during the use of the finding consists of the fact that the arms, being pivoted on pins placed outside of the roller group, when they are inactive and in vertical position, can slide vertically, to position themselves for another loading/unloading step, without interfering with the roller group which can therefore function freely, reducing the operating time of the unit.

The characteristics of the finding are shown more clearly through the description of a possible embodiment thereof, given only as a non-limiting example, with the help of the attached tables of drawings, where:
- figs. 1, 2 and 3 (Table I) represent three orthogonal views of a unit equipped with the work group according to the finding;
- figs. 4 and 5 (Table II) represent elevated front and plan views of the arm-moving mechanism;
- figs. 6 and 7 represent side views of the mechanism of fig. 4, in the two extreme positions of the arms, horizontal and vertical, respectively;
- figs. 8, 9, 10 and 11 (Table III) represent the successive steps of the treatment procedure of the work group according to the finding, in loading conditions of the product on the roller group;
- figs. 12, 13, 14 and 15 (Table IV) represent the successive steps of the treatment procedure of the work group according to the finding, in unloading conditions of the product from the roller group;
- figs. 16, 17 and 18 (Table V) represent three orthogonal views of the roller group.

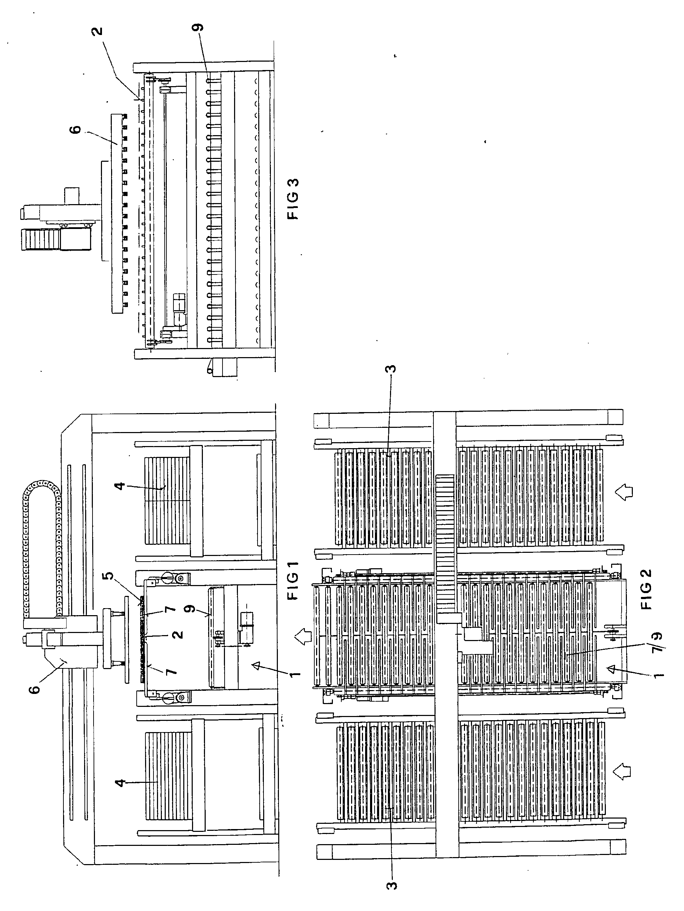

As can be seen in figures 1-3, the work group according to the finding, wholly indicated with reference numeral 1, is placed between two mobile platforms 3, on which are placed the piles 4 of products 5 to be moved, through the sliding gripper 6.

The work group 1 comprises a support surface 2 for one or more products 5, arranged side-by-side or one on top of the other, formed by a plurality of arms 7, parallel to each other and applied on a traverse 8. Said arms cooperate with a roller group 9, with motorised rollers, which sees to transporting the aforementioned products.

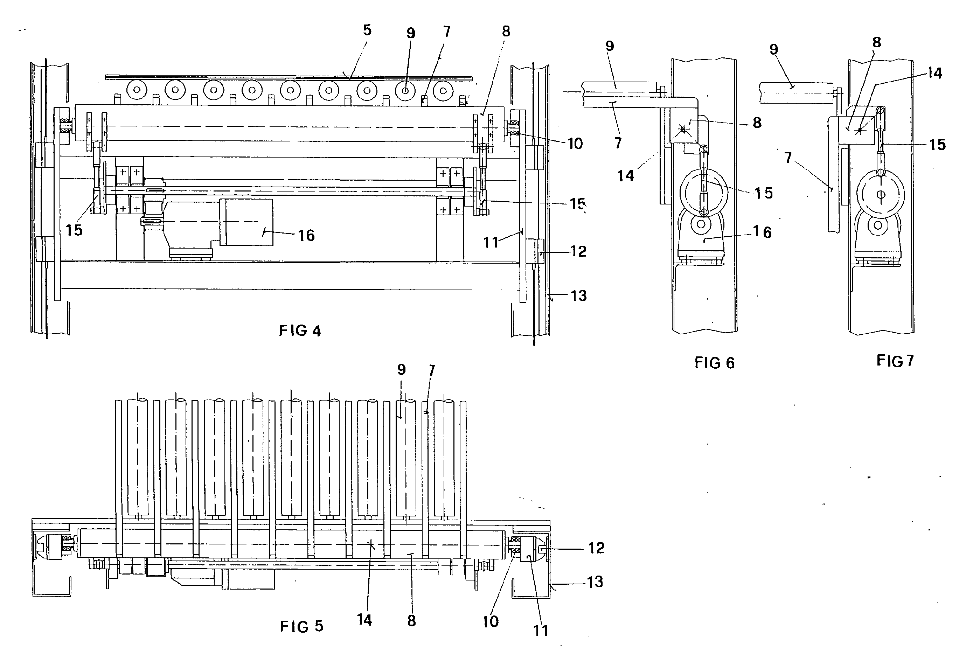

As can be seen in figs. 4 to 7, the traverse 8 is mounted idly on the side supports 10, integral with the brackets 11, capable of sliding vertically on the guides 12, applied to the columns 13, so as to give the arms 7, arranged spaced apart so as to be able to pass between two consecutive rollers, an alternative vertical motion.

The traverse 8 is susceptible to rotate angularly on its longitudinal axis 14, to position the arms from horizontal to vertical and vice-versa through a connecting rod-crank system 15, actuated by the motor 16.

The work procedure of the group 1 described above is thus regulated by the combination of the angular rotation and vertical sliding movements of the arms 7.

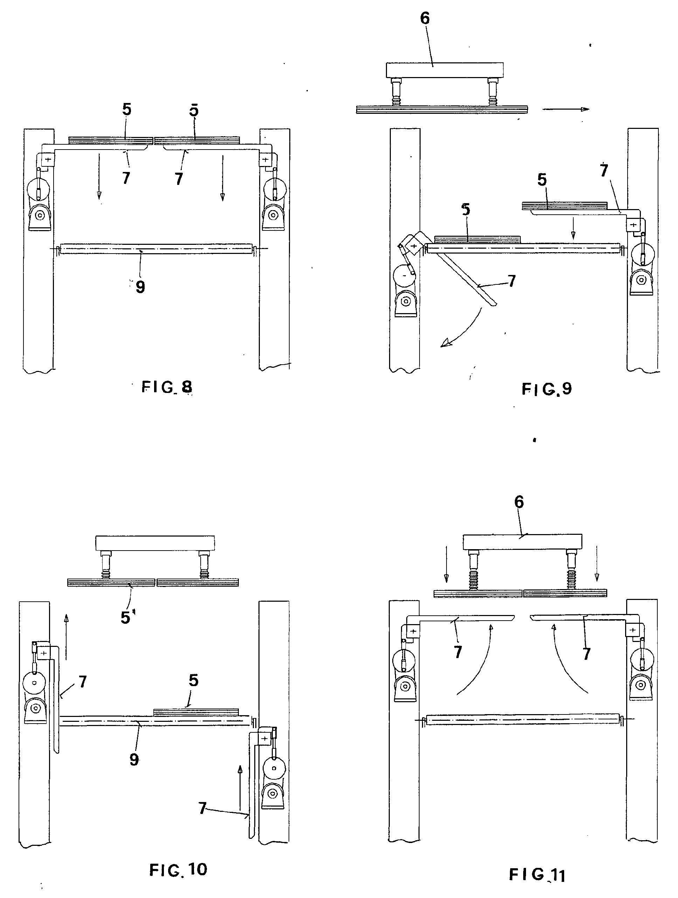

Specifically, for the loading action of the products on the roller group, from the starting position (fig. 8), the horizontal arms 7, which support the product 5, with a vertical displacement downwards associated, near to the roller group, with an angular rotation, position themselves below the roller group 9, so that the product itself rests on the aforementioned motorised roller group (fig. 9).

Then the arms, completing their angular rotation, up to a maximum of 90° go to a substantially vertical position, so as to be able to rise along the side of the roller group 9 (see fig. 10) to reposition themselves in the horizontal starting position, waiting for another product 5', transported by the gripper 6 (see fig. 11).

On the other hand, for the unloading action of the products 5 from the roller group, from the starting position the vertical arms 7 (see fig. 12), with an angular rotation, first of all position themselves horizontally below the product and then with a vertical displacement lift it from the roller group (see fig. 13).

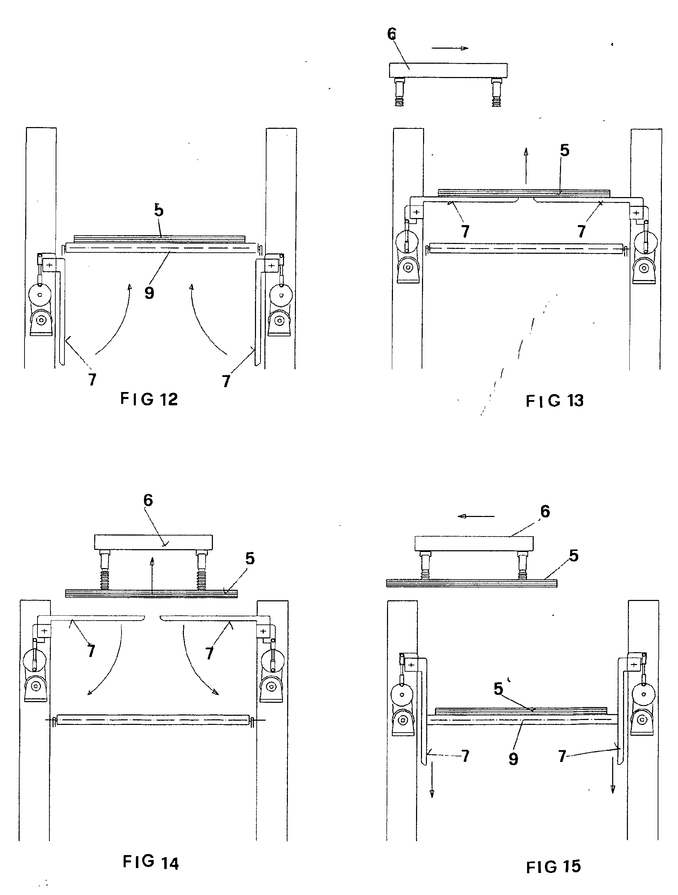

Then the product is taken from the gripper 6 whereas the arms, with an angular rotation, go back into substantially vertical position (see fig. 14).

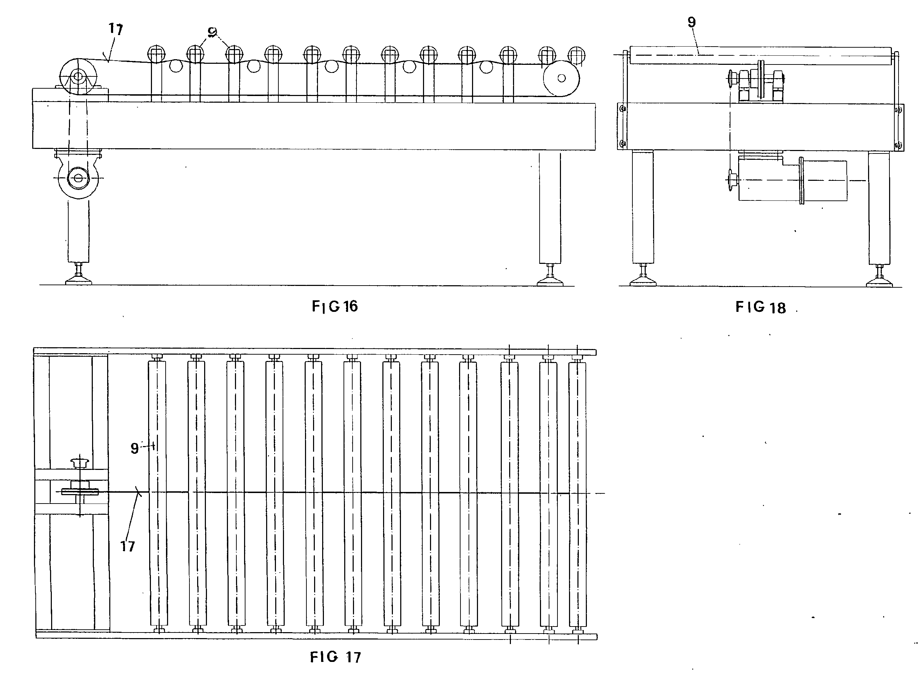

Finally, the arms, still arranged in vertical position, lower, repositioning themselves in the starting position, whereas the roller group takes care of supplying another product 5' to be unloaded (see fig. 15).

The finding finally foresees that the rollers of the roller group 9 are motorised through the use of a single motorisation arranged in the middle of the rollers, consisting, for example, of a slidable central belt 17 which, placed in contact with the aforementioned rollers, makes them rotate (see figs. 12-14).

Of course, embodiments different from those which are described are possible, just as the procedure can foresee the use of a single row of arms. Moreover, it can be foreseen that the two opposite rows of arms move simultaneously, but with staggered work steps, so as to allow the transportation of a greater number of products, without, for this reason, departing from the scope of the patent.

## Claims

1. LOADING/UNLOADING WORK GROUP ON A ROLLER GROUP, particularly suitable for being inserted in a transportation unit for semi-worked products such as panels of wood, plastic, polystyrene and the like
**characterised in that**
the support surface for the products to be loaded/unloaded on the roller group consists of a plurality of arms, arranged parallel and opposite each other so as to form two opposite and parallel rows thereof, which have the following constructive details:
- they are arranged in a direction substantially parallel to the direction of the axis of the rollers of the roller group;
- they are arranged separated from each other so that, when they are arranged horizontally and are have vertical motion, they can insert into the spaces of the rollers of the roller group.
- They are pivoted at one of their ends, so as to be able to pass from a horizontal position, which defines the support surface for the products, to a vertical position, when they are inactive;
- They are pivoted on pins arranged outside and to the side of the roller group, for which reason when they are inactive and in vertical position they can slide vertically without interfering with the roller group itself.

2. LOADING/UNLOADING WORK GROUP ON A ROLLER GROUP, according to claim 1, arranged next to or between two mobile platforms (3), upon which piles (4) of products (5) to be transported through the slidable gripper (6) are placed, said group (1) being **characterised in that** it comprises a support surface (2) for one or more products (5), arranged next to each other and/or one on top of the other, formed by a plurality of coplanar arms (7) and applied on a side traverse (8), said arms cooperating with a roller group (9), with motorised rollers, which takes care of transporting the aforementioned products.

3. LOADING/UNLOADING WORK GROUP ON A ROLLER GROUP, according to claim 2, **characterised in that** the traverse (8) is mounted idly one the end supports (10), integral with the brackets (11), capable of sliding vertically on the guides (12), applied to the columns (13), so as to give the arms (7) an alternative vertical motion.

4. LOADING/UNLOADING WORK GROUP ON A ROLLER GROUP, according to claim 2, **characterised in that** the arms (7) are arranged separated from each other, so as to be able to pass between two consecutive rollers.

5. LOADING/UNLOADING WORK GROUP ON A ROLLER GROUP, according to claim 3, **characterised in that** the traverse (8) is susceptible to rotating angularly on its longitudinal axis (14), to position the arms (7) from horizontal to vertical and vice-versa.

6. LOADING/UNLOADING WORK GROUP ON A ROLLER GROUP, according to claim 5, **characterised in that** the angular rotation, up to a maximum of 90°, of the arm-holding traverse (8), is realised through a connecting rod-crank system (15), actuated by the motor (16).

7. LOADING/UNLOADING WORK GROUP ON A ROLLER GROUP, according to one or more of the previous claims, **characterised in that** the rollers of the roller group (9) are motorised through the action of a single motorisation, which acts one the middle of the rollers and consists, for example, of a slidable central belt (17) which, placed in contact with the aforementioned rollers, makes them rotate.

8. LOADING/UNLOADING PROCEDURE OF PRODUCTS ON A ROLLER GROUP which uses the work group described in the first and one or more of the previous claims, **characterised in that** it is regulated by the combination of angular rotation and vertical sliding movements of the arms (7).

9. LOADING/UNLOADING PROCEDURE OF PRODUCTS ON A ROLLER GROUP, according to claim 8, **characterised in that** it foresees the following work steps:
- from the starting position, the arms (7) arranged horizontally, which support the product (5), with a vertical displacement downwards, near to the roller group, also with an angular rotation, position themselves below the roller group (9), so that the product itself rests upon the aforementioned motorised roller group;
- then the arms (7), completing the angular rotation, to a maximum of 90°, go into a substantially vertical position, so as to be able to rise along the side of the roller group (9), to reposition themselves in the horizontal starting position, waiting for another product (5'), transported by the gripper (6).

10. LOADING/UNLOADING PROCEDURE OF PRODUCTS ON A ROLLER GROUP, according to claim 8, **characterised in that** it foresees the following work steps:
- from the starting position, with the products (5) placed on the roller group, the arms (7) arranged vertically, with an angular rotation, firstly position themselves below the product and then with a vertical displacement lift it from the roller group itself;
- then the product (5) is picked up by the gripper (6) whereas the arms (7), with an angular rotation, go back into vertical position and lower, repositioning themselves in the starting position, whereas the roller group takes care of supplying another product (5') to be unloaded.

11. PROCEDURE, according to claims 9 and/or 10, **characterised in that** a single row of arms is actuated.

12. PROCEDURE, according to claims 9 and/or 10, **characterised in that** the two opposite rows of arms move simultaneously, but with staggered work steps.
